# EUROPÄISCHE PATENTSCHRIFT

(11) **EP 3 129 705 B1**
(45) Veröffentlichungstag und Bekanntmachung des Hinweises auf die Patenterteilung: **13.06.2018**
(21) Anmeldenummer: 15721538.5
(22) Anmeldetag: 07.04.2015
(51) Int. Cl.: F21V 7/18, F21V 17/08, F21V 17/10, G03B 15/06, F21W 131/406

(54) **LICHTFORMVORRICHTUNG UND ANORDNUNG**
LIGHT-SHAPING DEVICE AND ARRANGEMENT
AGENCEMENT MODIFIANT LA FORME D'UN ÉCLAIRAGE, ET DISPOSITIF CORRESPONDANT

(30) Priorität: 07.04.2014 DE 102014104924
(43) Veröffentlichungstag der Anmeldung: 15.02.2017
(73) Patentinhaber: Sumolight GmbH, 10439 Berlin (DE)
(72) Erfinder: YELLIN, David, 10249 Berlin (DE); POLACZEK, Ralf, 10439 Berlin (DE)
(74) Vertreter: Bittner, Thomas L.
(86) Internationale Anmeldenummer: PCT/DE2015/100145
(87) Internationale Veröffentlichungsnummer: WO 2015/154754

(56) Entgegenhaltungen:
- CN-A- 103 149 776
- CN-U- 202 275 250
- DE-U1-202007 001 958
- US-B1- 7 978 971

## Beschreibung

Die Erfindung betrifft eine Lichtformvorrichtung und eine Anordnung.

### Hintergrund

Eine solche Lichtformvorrichtung ist zum Beispiel aus dem Dokument WO 2013 / 178222 A1 bekannt.

Das Dokument DE 20 2007 001 958 U1 offenbart einen dreidimensional zusammenklappbaren Lampenschirm mit einer zusammenlegbaren Schiene, die auf einer kubischen Oberfläche zusammenklappbar ist, und einer nachgiebigen Stoffabdeckung, die auf eine Ebene faltbar ist und auf einer Außenseite der zusammenlegbaren Schiene angeordnet ist und einem flexiblen Ring an einem unteren Rand davon aufweist, der in einer gewünschten Form fixierbar und faltbar ist. Die zusammenlegbare Schiene und die nachgiebige Stoffabdeckung sind verbunden und ausgefahren bzw. ausgegeben, um einen kubischen Lampenschirm zu bilden. Sie sind entsprechend zusammenklappbar, um einen dreidimensionalen Faltzustand einzunehmen. Aus dem Dokument CN 202 275 250 U ist eine Softbox bekannt, bei der ein Reflexionsschirm von mehreren Stützstreben gestützt wird, welche mit einem Trägerteil verbunden sind. Der Reflexionsschirm weist ein offenes Ende auf, an dem die Stützstreben beweglich mit dem Trägerteil verbunden sind. Zwischen jeweils zwei benachbarten Stützstreben ist eine faltbare Verbindungsstange angeordnet. Aus CN 103 149 776 A ist eine ähnliche Softbox bekannt. Das Dokument US 7,978,971 B1 offenbart eine zusammenlegbare Softbox für die Nutzung mit einem fotografischen Blitzlicht. Der zusammenlegbare Körper der Softbox besteht aus zwei miteinander verbundenen Seitenteilen und weist eine distale sowie eine proximale Öffnung auf. Die Softbox weist weiterhin ein Frontteil auf, welches lösbar mit dem distalen Ende des Körpers verbindbar ist.

### Zusammenfassung

Aufgabe der Erfindung ist es, eine Lichtformvorrichtung mit verbesserten Gebrauchseigenschaften zu schaffen, die flexibel einsetzbar ist, insbesondere bei Scheinwerfern für Foto- oder Filmaufnahmen.

Nach einem Aspekt ist eine Lichtformvorrichtung zum lösbaren Montieren an einer Befestigungseinrichtung einer Beleuchtungsvorrichtung geschaffen. Die Lichtformvorrichtung weist Folgendes auf: Seitenwände aus flexiblem Material, die nach dem Montieren an einer Beleuchtungseinrichtung einen Lichtform- und Lichtabgabebereich umgeben, der sich zwischen einer Eintrittsöffnung und einer Austrittsöffnung gebildet ist; Spannelemente, die eingerichtet sind, die Seitenwände auszusteifen; und einen Befestigungsmechanismus zum lösbaren Montieren an der Befestigungseinrichtung der Beleuchtungsvorrichtung, wobei die Austrittsöffnung als runde Austrittsöffnung gebildet ist, die zumindest abschnittsweise von einem frontseitigen Spannelement umgeben wird, welches das flexible Material der Seitenwände aufspannt.

Nach einem weiteren Aspekt ist eine Anordnung mit einer Beleuchtungsvorrichtung, insbesondere Scheinwerfer, und einer an der Beleuchtungsvorrichtung lösbar montierten Lichtformvorrichtung geschaffen.

Die Lichtformvorrichtung kann als selbstspannende oder selbstaufspannende Lichtformvorrichtung ausgeführt sein.

Mit der umlaufenden Seitenwand ist ein Reflektor gebildet.

Die Eintrittsöffnung kann rund oder eckig sein, zum Beispiel mit vier oder mehr Ecken ausgeführt sein.

Das frontseitige Spannelement kann lösbar an den Seitenwänden angeordnet sein.

Die Spannelemente können Stabelemente aufweisen, die sich von der Eintrittsöffnung zur Austrittsöffnung in Längsrichtung des Lichtform- und Lichtabgabebereiches erstrecken.

Zumindest ein Teil der Spannelemente kann aus einem faserverstärktem Material bestehen, insbesondere einem kohlefaserverstärktem Material.

Das frontseitige Spannelement kann aus Metall sein, zum Beispiel Federstahl.

Das frontseitige Spannelement kann aus einem Flachmaterial bestehen.

Im die Austrittsöffnung umgebenden Bereich und / oder auf einer Innenseite der Seitenwände ist eine Befestigungseinrichtung zur lösbaren Befestigung einer Diffusionseinrichtung (Diffusor) angeordnet. Das frontseitige Spannelement koppelt lösbar an die Diffusionseinrichtung, wenn die Diffusionseinrichtung angebracht ist. Die Diffusionseinrichtung kann mit dem frontseitigen Spannelement zusammen vom Reflektor abnehmbar sein.

Ein oder mehrere der Spannelemente können in zugeordneten Aufnahmetaschen in den Seitenwänden angeordnet sein.

Es kann eine faltbare Ausgestaltung der Lichtformvorrichtung vorgesehen sein.

Der Befestigungsmechanismus kann Druckknöpfe und / oder Klettbandabschnitte aufweisen. Alternativ oder ergänzend können ein oder mehrere magnetische Knöpfe zum Befestigungsmechanismus beitragen. Die magnetischen Knöpfen können mit einer Rasteinrichtung kombiniert werden. In einer Ausführung ist die magnetische Verbindung mittels seitlicher Relativverlagerung der magnetisch gekoppelten Teile lösbar.

Der Befestigungsmechanismus kann eine oder mehrere Aufnahmetaschen aufweisen, in die Enden der Spannelemente eingesteckt sind.

Zumindest ein Teil der Spannelemente kann sich kreuzend angeordnet sein.

Zumindest ein Teil der Spannelemente kann sich nicht kreuzend angeordnet sein.

Die Austrittsöffnung kann zumindest teilweise mit einer Lichtdiffusionseinrichtung bedeckt sein.

Das flexible Material kann aus einem Schichtmaterial mit einem Stapel von Schichten gebildet sein, wobei die folgenden Schichten vorgesehen und miteinander verklebt sind: Textilschicht, eine metallisierte Polyesterfolienschicht und weiße Polyesterfolienschicht.

Nachfolgend werden weitere Aspekte beschrieben.

Es ist ein Lichtformer mit runder Abstrahlfläche realisiert, der sich zusammenlegen lässt, ohne Speedring auskommen kann (in sich selbst aufspannt und nicht über Druck auf den Scheinwerfer oder einen Speedring und direkt am Scheinwerfer befestigt werden kann). Die Lichtformvorrichtung hat ein geringes Gewicht, da Kohlefaserstreben verwendet werden können, da auf diese nur eine sehr geringe Biegekraft wirkt bzw. ein sehr geringer Biegeradius erzielt wird.

Das Gewicht ist in der Praxis ein wichtiger Faktor, da Bügel oder Kugelkopf eines Scheinwerfers nur eine gewisse Haltekraft aufweisen (Reibung). Große Lichtformer üben aufgrund der großen Menge des verwendeten Stoffes und des Hebelgesetzes eine hohe Kraft auf die Scheinwerfer aus. Wenn ein Scheinwerfer im Freien verwendet wird, kommt zudem der Winddruck hinzu. Deshalb sind Lichtformer aus geringfügig dickerem / schwerem Stoff bspw. häufig nicht verwendbar. Runde Lichtformer sind wichtig für natürliche / runde Reflexionen auf Gegenständen und vor allem in den Augen. Dies ist beim Film sehr wichtig.

Beim Reflektor der Lichtformvorrichtung (Seitenwände) können ausschließlich gerade Streben zum Einsatz kommen, die diesen in Richtung zwischen Scheinwerfer (Eintrittsöffnung) und Front des Reflektors (Austrittsöffnung) aufspannen, dort wo eine Diffusionseinrichtung (Diffusion) zum Weichmachen / Modifizieren des Lichts eingesetzt werden kann. Der Reflektor lässt sich dann mit den eingesetzten Streben so schmal wie ein Regenschirm zusammenlegen, ohne dass irgendetwas entfernt werden muss.

Die Aufspannung des Reflektors kann in zirkularer Richtung mit Hilfe der Diffusion erfolgen, die einen Ring aus Federstahl (Flachstahl) aufweisen kann. Die Diffusion kann sich über eine Verdrehung ähnlich einer Acht zusammenfalten lassen. Solche Aufspannungen sind von Zelten und photographischen Reflektoren bekannt. Das heißt der Aufbau der Diffusionseinrichtung als solcher ist in verschiedenen Ausführungen bekannt. Ein Ring aus Federstahl kann sich in einem Schlauch aus Spandex (flexiblem / Stretch-Textil) befinden.

Die Diffusion ist mit dem Reflektor zu verbinden. Hierzu kann man Klettband und / oder Druckknöpfe verwenden. Das Klett kann nicht umlaufend um die Diffusion angeordnet sein, da Klettband nicht dehnbar ist und damit die gesamte Faltung bzw. straffe Aufspannung nicht funktioniert. Es können nur Klettstücke (oder Stücke mit Druckknöpfen) um den Umfang verteilt werden. Das Klettband kann unterbrochen sein, um die Dehnbarkeit zu gewährleisten. Der Reflektor kann innen Klettband (evtl. Druckknöpfe) aufweisen, die Diffusion außen. Sie wird in den Reflektor eingefügt und spannt diesen auf.

Üblicherweise werden verschiedene (Licht)Diffusionseinrichtungen am Filmset verwendet, um unterschiedliche Effekte zu erreichen. Somit muss die Diffusion schnell und leicht wechselbar sein. Würde man den Ring mit dem Federstahl aus dem Reflektor nehmen, kollabiert der Reflektor, dies macht das wechseln mühselig. Das Diffusionsmaterial (der Stoff) kann aus dem Federstahlring leicht entnehmbar und wieder einsetzbar sein. Eine Möglichkeit ist die Verwendung eines Reißverschlusses. Auch mehrere Reißverschlüsse können vorgesehen sein, zum Beispiel zwei. Es können ein oder mehrere flexible Reißverschlüsse verwendet werden. Weiter könnte alternativ oder ergänzend ein Klettband verwendet werden. Zudem könnten auch Haken und Ösen verwendet werden.

Die Diffusionseinrichtung kann mit dem Reißverschluss an einem Federstahlring befestigt werden, an dem sich zwei Reißverschlüsse befinden. Mit dem zweiten Reißverschluss kann die Diffusionseinrichtung inklusiv Stahlring am Reflektor befestigt werden. Hierdurch kann die Diffusionseinrichtung in einer Ausführung ohne Entnahme des Rings gewechselt werden. Hierdurch bleibt der Reflektor in Position. Außerdem können die Diffusionseinrichtungen günstiger hergestellt werden, sind kleiner, leichter und einfacher zu transportieren.

Es kann ein weißes oder diffuses Reflektormaterial (zum Beispiel mit Textil) verwendet werden, da ein silbernes (spiegelähnliches) Material zu ungleichmäßiger Ausleuchtung der Diffusion (Diffusionseinrichtung) führen kann.

Herkömmliches Textil basiertes, weißes Reflektormaterial ist in der Regel nicht sehr reflektierend. Hierdurch geht viel Licht verloren, da Licht im Inneren zwischen der Diffusionseinrichtung und dem Reflektor mehrmals hin und her reflektiert wird. Dies kann zur gleichmäßigen Ausleuchtung führen, d.h. einem unerwünschter Hotspot in der Mitte. Bisher wird häufig der Weg gegangen, um einen Hotspot in der Mitte des Diffusionsmaterials zu vermeiden, dass eine zweite innere Diffusion existiert die vom Durchmesser kleiner sein kann als der Reflektor an der entsprechenden Stelle und / oder in der Mitte mehrere Lagen Textil ausweist. Das Problem ist, das diese viel Licht schluckt. Dies ist insbesondere bei LED und vor allem batteriebetriebenen Scheinwerfer problematisch, da diese nur eine begrenzte Lumenzahl bereitstellen.

Je höher der Reflexionsgrad des Reflektormaterials ist, umso gleichmäßiger ist die Ausleuchtung der Diffusionseinrichtung und umso größer ist die Lichtausbeute bzw. Beleuchtungsstärke, da das Licht zwischen Diffusionsmaterial und Reflektor mehrmals hin und her reflektiert wird. Bei einem hochreflektierenden (diffusem) Reflektor kann die zweite innere Diffusion wegfallen. Hierdurch kann eine höhere Effizienz erreicht werden (50 bis 100% höhere Beleuchtungsstärke bei gleicher Lumenzahl des Leuchtmittels).

Ein effizientes und leichtes Reflektor- oder Reflexionsmaterial kann realisiert werden, indem ein Textil mit einer metallisierten, für Licht hochreflektiven Folie beschichtet ist, insbesondere einer Silberfolie. Diese hochreflektive Schicht kann mit einem matten, zum Beispiel weißen Material, was hochreflektiv ist, beschichtet werden (weißes PE oder Polyester). Vorteil ist, dass man das weiße Material sehr dünn halten kann, und das Textil leicht ist und trotzdem auch kein Licht an der Rückseite austritt.

Ein Aufbau kann wie folgt aussehen: Textil (Polyester), bevorzugt Nylon (ist sehr strapazierfähig) 150 bis 210 Denier, dann eine metallisierte (Aluminium) Polyesterfolienschicht (wahlweise beidseitig metallisiert), dann eine Schicht weiße Polyesterfolie, wobei alles mit klarem Klebstoff verklebt ist. Zur Festigkeitserhöhung kann eine Zwischenschicht aus über Kreuz laufenden dicken Fäden mit großem Abstand (ca. 20mm), die ein rombenförmiges Muster ergeben, zwischen dem Textil und der metallisierter Polyesterfolie eingebracht werden. Dadurch erhöht sich das Gewicht nur gering, aber die Festigkeit stark. Dieser Aufbau ergibt ein sehr effizientes, leichtes, diffuses und auch kostengünstiges Reflektormaterial.

Das Material für den Reflektor kann nicht nur bei der Lichtformvorrichtung zum Einsatz kommen, sondern auch bei anderen Lichtreflektor- oder Lichtreflexionsvorrichtung, zum Beispiel einem flachen oder gekrümmten flächigen Reflektor, insbesondere Lichtreflektor- oder Lichtreflexionsvorrichtung für Bild- oder Filmaufnahmen.

Unabhängig hiervon kann nach einem alternativen Aspekt ein Reflektormaterial vorgesehen sein, also ein lichtreflektierendes Material auf Textilbasis, bei dem ein Schichtmaterial mit aufeinanderliegenden Schichten gebildet ist, wobei die folgenden Schichten vorgesehen und miteinander verklebt sind: Textilschicht; eine metallisierte Polyesterfolienschicht, die auf der Textilschicht angeordnet ist, wobei die Metallisierung ein- oder beidseitig ausgebildet ist; und weiße Polyesterfolienschicht, die auf der metallisierte Polyesterfolienschicht angeordnet ist. Zwischen der Textilschicht und der metallisierten Polyesterfolienschicht kann eine Zwischenschicht aus über Kreuz laufenden Fäden angeordnet sein.

Das Reflektormaterial kann alternativ Folgendes aufweisen: schwarzes Textilgewebe, insbesondere schwarzes Nylongewebe wie zum Beispiel Ripstop Nylon (70D); schwarzer Kleber; doppelt silber beschichtete Reflexionsfolie; durchsichtiger Kleber und weißes Textilgewebe, insbesondere weißes Nylongewebe wie zum Beispiel Ripstop Nylon (70D). Hierdurch können ein hoher Reflexionsgrad und eine matte ungerichtete Reflexion erreicht werden. Zudem ist das Material stabil und reißfest. Es ist eine zweite Textilschicht vorgesehen. Das Reflektormaterial kann aus einem solchen Schichtaufbau bestehen.

Das Reflektormaterial kann in einer alternativen Ausführung Folgendes aufweisen: schwarzes Textilgewebe, insbesondere schwarzes Nylongewebe wie zum Beispiel Ripstop Nylon (70D); schwarzer Kleber; weiße Folie; durchsichtiger Kleber; doppelt Silber beschichtete Reflexionsfolie; durchsichtiger Kleber und weißes Textilgewebe, insbesondere weißes Nylongewebe wie zum Beispiel Ripstop Nylon (70D). Das Reflektormaterial kann aus einem solchen Schichtaufbau bestehen.

### Beschreibung von Ausführungsbeispielen

Im Folgenden werden Ausführungsbeispielen unter Bezugnahme auf Figuren einer Zeichnung näher erläutert. Hierbei zeigen:
- Fig. 1: eine schematische Darstellung einer Lichtformvorrichtung mit einer Eintrittsöffnung und einer Austrittsöffnung,
- Fig. 2: eine schematische perspektivische Darstellung einer Spanneinrichtung (Basiskonstruktion) für einen anderen Lichtformer,
- Fig. 3: eine schematische Darstellung für eine Spanneinrichtung eines weiteren Lichtformers,
- Fig. 4: eine perspektivische Darstellung eines Lichtformers, bei dem im Bereich einer Austrittsöffnung eine Diffusionseinrichtung angeordnet ist,
- Fig. 5: eine perspektivische Darstellung einer Aufnahmetasche,
- Fig. 6: eine Darstellung der Aufnahmetasche von der Seite,
- Fig. 7: eine perspektivische Darstellung der Aufnahmetasche aus Fig. 5 in einem aufgeklappten Zustand.

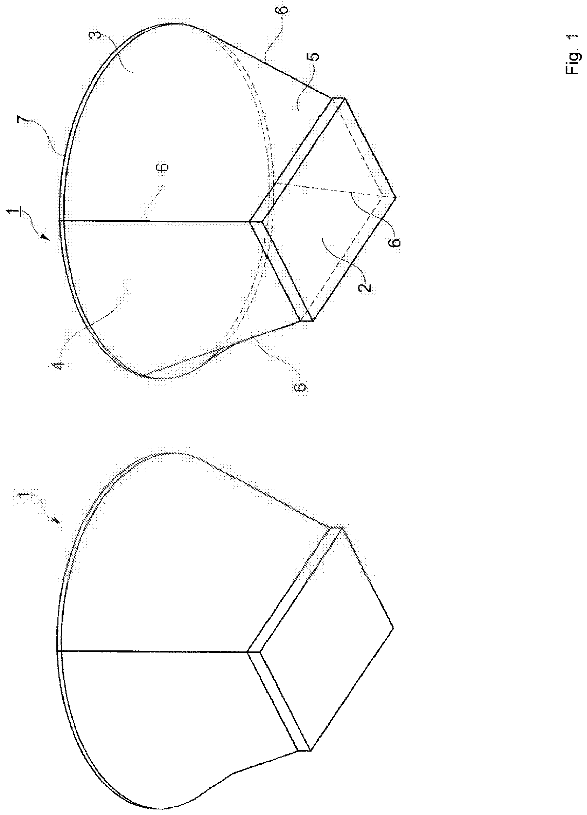

Fig. 1 zeigt beispielhaft eine Lichtformvorrichtung 1 mit einer Eintrittsöffnung 2 und einer Austrittsöffnung 3. Zwischen der Eintrittsöffnung 2 und der Austrittsöffnung 3 erstreckt sich Lichtform- und Lichtabgabebereich 4, bei dem eine umlaufende Seitenwand 5 aus flexiblem Material ist, zum Beispiel einem Textilmaterial. Das Material kann auch als Reflektormaterial bezeichnet werden. Spannelemente 6 sind vorgesehen, um die Seitenwand auszusteifen. Die Spannelemente 6 verlaufen in Längsrichtung des Lichtform- und Lichtabgabebereiches 4, wobei eine Schrägstellung zur Mittelachse des Lichtform- und Lichtabgabebereiches 4 gegeben ist.

Die Spannelemente 6 gehen Eckbereichen der viereckigen Eintrittsöffnung 2 aus.

Die Austrittsöffnung 3 als runde Austrittsöffnung gebildet, die zumindest abschnittsweise von einem front- oder austrittsseitigen Spannelement 7 umgeben wird, welches das flexible Material der Seitenwand 5 aufspannt. Das frontseitige Spannelement 7 ist aus einem Flachmaterial, zum Beispiel Federstahl.

Es ist ein Lichtformer mit einer runden Abstrahlfläche geschaffen, der sehr effizient ist, eine gleichmäßige Ausleuchtung liefert, sehr leicht ist und damit auch sehr groß (135cm Durchmesser und mehr) gebaut werden kann und auch für kleinere Scheinwerfer insbesondere LED Scheinwerfer, deren Haltersystem in der Regel nur für geringe Haltekräfte ausgelegt sind, verwendet werden kann. Zudem weist er ein kleines Packmaß auf und ist kostengünstig herstellbar.

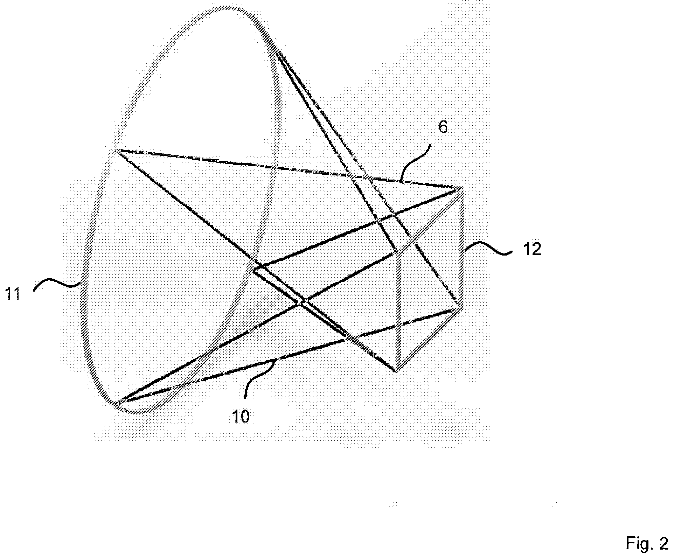

Fig. 2 zeigt eine perspektivische Darstellung einer als Gestell ausgeführten Basiskonstruktion 10 für eine Lichtformvorrichtung, bei der sich die Spannelemente 6, die sich zwischen der Eintrittsöffnung 2 und der Austrittsöffnung 3 erstrecken, paarweise kreuzen. Die Spannelemente 6 erstrecken sich zwischen einem austrittsseitigen Spannelement 11 und einem eintrittsseitigen Spannelement 12, wobei in der gezeigten Ausführungsform das austrittseitige Spannelement 11 als ein Ring gebildet ist. Das eintrittsseitige Spannelement 12 weist eine Viereckform auf.

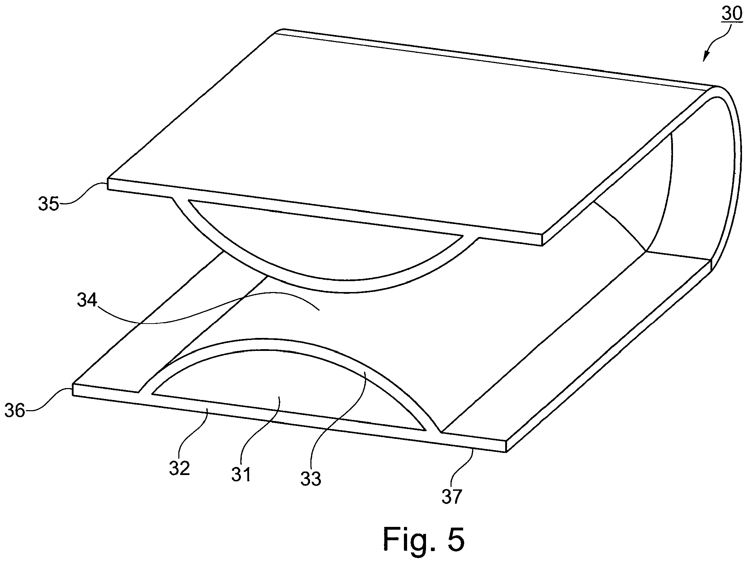

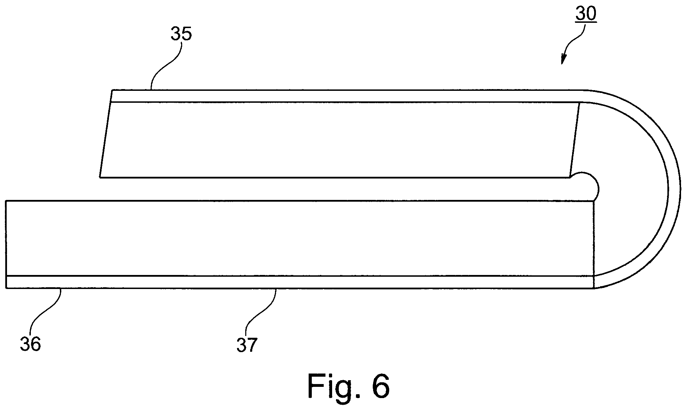

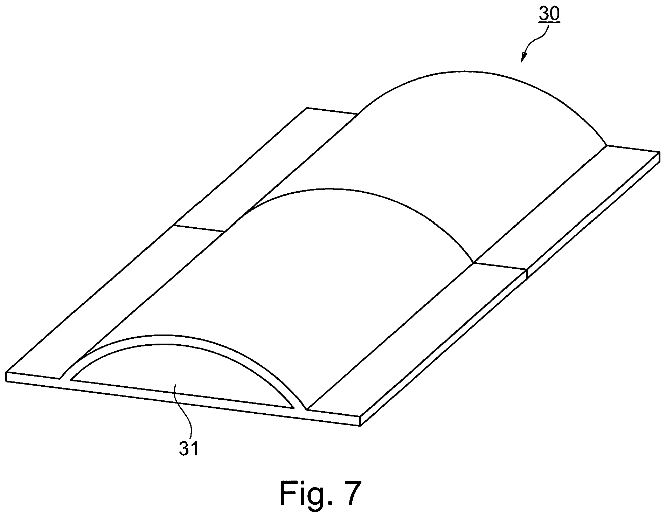

In Fig. 2 ist die Basiskonstruktion 10 im aufgebauten oder aufgespannten Zustand gezeigt. Zum Ausbilden der Lichtformvorrichtung wird die Basiskonstruktion im Bereich zwischen dem austrittsseitigen Spannelement 11 und dem eintrittsseitigen Spannelement 12 außenseitig mit Reflektormaterial bespannt. Hierbei wird das Reflektormaterial zum Beispiel an dem austrittsseitigen Spannelement 11 und dem eintrittsseitigen Spannelement 12 befestigt, sei es lösbar oder nicht lösbar, zum Beispiel mittels umnähen. Enden der Spannelemente können lösbar in zugeordnete Taschen (nicht dargestellt) auf der Innenseite des Reflektormaterials eingesteckt werden. Die Taschen können als Aufnahmetasche ausgeführt, zum Beispiel in der unten unter Bezugnahme auf die Fig. 5 bis 7 erläuterten Ausbildung.

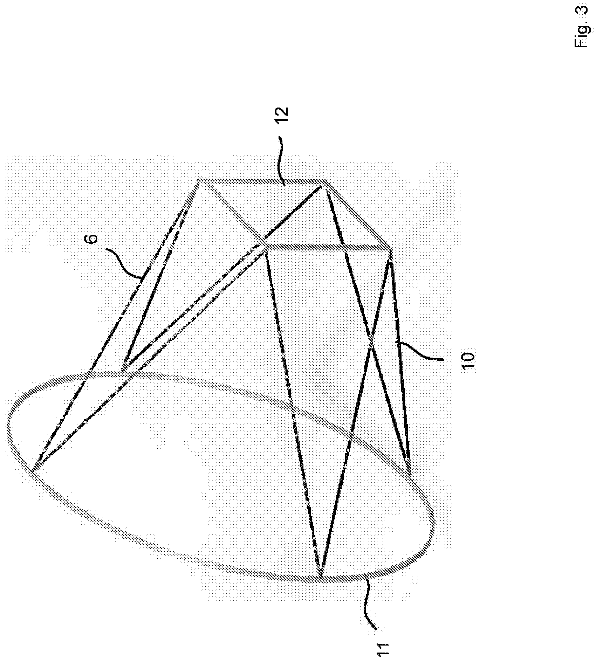

In ähnlicher Weise zur Ausgestaltung in Fig. 2 sind das austrittseitige Spannelement 11 sowie das eintrittsseitige Spannelement 12 bei der weiteren Lichtformvorrichtung in Fig. 3 ausgeführt. Bei der in Fig. 3 gezeigten Ausführung sind die Spannelemente 6 nicht kreuzend angeordnet.

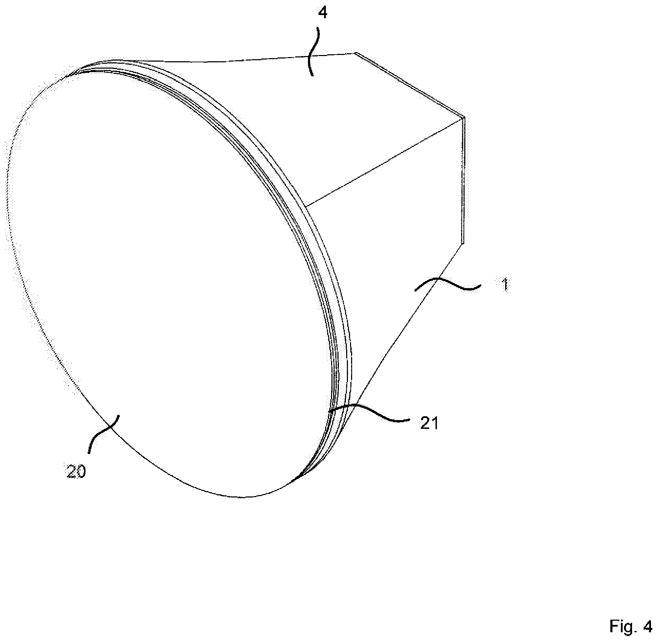

Fig. 4 zeigt eine perspektivische Darstellung der Lichtformvorrichtung 1. Im Bereich der Austrittsöffnung 3 ist eine Lichtdiffusionsvorrichtung 20 angeordnet, die mittels eines schematisch dargestellten Reißverschlusses 21 lösbar angebracht ist. Der Reißverschluss kann an das Reflektormaterial angenäht sein.

Die Fig. 5 bis 7 zeigen Darstellungen einer Aufnahmetasche 30, die bei den Lichtformvorrichtungen innenseitig im Lichtformbereich 4 angeordnet ist, um Endabschnitte der Spannelemente 6 aufzunehmen, insbesondere proximal zum front- oder eintrittsseitigen Spannelement 7, 12 angeordnete Endabschnitte. Die Aufnahmetasche 30 weist einen Aufnahmeraum 31 auf, der zwischen einem oberen und einem unteren Abschnitt 32, 33 der Aufnahmetasche 30 gebildet ist.

In Fig. 5 ist die Aufnahmetasche 30 in einem umgeschlagenen Zustand gezeigt, wobei in einem Zwischenbereich 34 zwischen Abschnitten 35, 36 der Aufnahmetasche 30 eine Klettverbindung ausgebildet sein kann. Beim Anbringen der Aufnahmetasche auf der Innenseite des Lichtformers kann diese mit einer Rückseite 37 auf dem Reflektormaterial aufliegen, zum Beispiel angenäht oder mittels Klettband befestigt sein. Die Aufnahmetasche 30 kann an der umlaufenden Seitenwand 5 der Lichtformvorrichtung 1 innenseitig angenäht sein.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Lichtformvorrichtung (1) zum lösbaren Montieren an einer Befestigungseinrichtung einer Beleuchtungsvorrichtung, mit
- Seitenwänden (5) aus flexiblem Material, die nach dem Montieren an einer Beleuchtungseinrichtung einen Lichtform- und Lichtabgabebereich (4) umgeben, der zwischen einer Eintrittsöffnung (2) und einer Austrittsöffnung (3) gebildet ist,
- Spannelemente (6), die eingerichtet sind, die Seitenwände (5) auszusteifen, und
- einem Befestigungsmechanismus zum lösbaren Montieren an der Befestigungseinrichtung der Beleuchtungsvorrichtung,
**dadurch gekennzeichnet, dass**
- die Austrittsöffnung (3) als runde Austrittsöffnung gebildet ist, die zumindest abschnittsweise von einem frontseitigen Spannelement (7, 11) umgeben wird, welches das flexible Material der Seitenwände (5) aufspannt,
- im die Austrittsöffnung (3) umgebenden Bereich und / oder auf einer Innenseite der Seitenwände (5) eine Befestigungseinrichtung zur lösbaren Befestigung einer Diffusionseinrichtung (20) angeordnet ist und
- das frontseitige Spannelement (7, 11) lösbar an die Diffusionseinrichtung (20) koppelt, wenn diese angebracht ist.

2. Lichtformvorrichtung (1) nach Anspruch 1, **dadurch gekennzeichnet, dass** die Spannelemente (6) Stabelemente aufweisen, die sich von der Eintrittsöffnung (2) zur Austrittsöffnung (3) in Längsrichtung des Lichtform- und Lichtabgabebereiches (4) erstrecken.

3. Lichtformvorrichtung (1) nach Anspruch 1 oder 2, **dadurch gekennzeichnet, dass** zumindest ein Teil der Spannelemente (6) aus einem faserverstärktem Material besteht, insbesondere einem kohlefaserverstärktem Material.

4. Lichtformvorrichtung (1) nach mindestens einem der vorangehenden Ansprüche, **dadurch gekennzeichnet, dass** das frontseitige Spannelement (7, 11) aus Metall ist.

5. Lichtformvorrichtung (1) nach mindestens einem der vorangehenden Ansprüche, **dadurch gekennzeichnet, dass** das frontseitige Spannelement (7,11) aus einem Flachmaterial ist.

6. Lichtformvorrichtung (1) nach mindestens einem der vorangehenden Ansprüche, **dadurch gekennzeichnet, dass** ein oder mehrere der Spannelemente (6) in zugeordneten Aufnahmetaschen (30) in den Seitenwänden angeordnet sind.

7. Lichtformvorrichtung (1) nach mindestens einem der vorangehenden Ansprüche, **gekennzeichnet durch** eine faltbare Ausgestaltung.

8. Lichtformvorrichtung (1) nach mindestens einem der vorangehenden Ansprüche, **dadurch gekennzeichnet, dass** der Befestigungsmechanismus Druckknöpfe und / oder Klettbandabschnitte aufweist.

9. Lichtformvorrichtung (1) nach mindestens einem der vorangehenden Ansprüche, **dadurch gekennzeichnet, dass** der Befestigungsmechanismus eine oder mehrere Aufnahmetaschen (30) aufweist, in die Enden der Spannelemente (6) eingesteckt sind.

10. Lichtformvorrichtung (1) nach mindestens einem der vorangehenden Ansprüche, **dadurch gekennzeichnet, dass** zumindest ein Teil der Spannelemente (6) sich kreuzend angeordnet sind.

11. Lichtformvorrichtung (1) nach mindestens einem der vorangehenden Ansprüche, **dadurch gekennzeichnet, dass** zumindest ein Teil der Spannelemente (6) sich nicht kreuzend angeordnet sind.

12. Lichtformvorrichtung (1) nach mindestens einem der vorangehenden Ansprüche, **dadurch gekennzeichnet, dass** die Austrittsöffnung (3) zumindest teilweise mit der Lichtdiffusionseinrichtung (20) bedeckt ist.

13. Lichtformvorrichtung (1) nach mindestens einem der vorangehenden Ansprüche, **dadurch gekennzeichnet, dass** das flexible Material aus einem Schichtmaterial mit einem Stapel von Schichten gebildet ist, wobei die folgenden verklebten Schichten vorgesehen sind: Textilschicht, eine metallisierte Polyesterfolienschicht und weiße Polyesterfolienschicht.

14. Anordnung, mit einer Beleuchtungsvorrichtung, insbesondere Scheinwerfer, und einer an der Beleuchtungsvorrichtung lösbar montierten Lichtformvorrichtung (1) nach mindestens einem der vorangehenden Ansprüche.

## Claims

1. A light shaping device (1) for being separably mounted on a fastening arrangement of a lighting device, comprising
- sidewalls (5) of flexible material, which after the mounting on a lighting device surround a light shaping and light emitting region (4) formed between an inlet opening (2) and an outlet opening (3),
- tensioning elements (6) designed for stabilizing the sidewalls (5), and
- a fastening mechanism for separable mounting on the fastening arrangement of the lighting device,
**characterized in that**
- the outlet opening (3) is provided in the form of a round outlet opening, which is at least sectionally enclosed by a frontal tensioning element (7, 11) that expands the flexible material of the sidewalls (5),
- a fastening arrangement for separably fastening a diffusion device (20) is arranged in the region surrounding the outlet opening (3) and/or on an inner side of the sidewalls (5), and
- the frontal tensioning element (7, 11) couples seperably to the diffusion device (20) when the diffusion device (20) is attached.

2. The light shaping device (1) according to claim 1, **characterized in that** the tensioning elements (6) comprise rod elements extending from the inlet opening (2) to the outlet opening (3) in the longitudinal direction of the light shaping and light emitting region (4).

3. The light shaping device (1) according to claim 1 or 2, **characterized in that** at least some of the tensioning elements (6) consist of a fiber-reinforced material, particularly of a carbon fiber-reinforced material.

4. The light shaping device (1) according to at least one of the preceding claims, **characterized in that** the frontal tensioning element (7, 11) is made of metal.

5. The light shaping device (1) according to at least one of the preceding claims, **characterized in that** the frontal tensioning element (7, 11) is made of a flat material.

6. The light shaping device (1) according to at least one of the preceding claims, **characterized in that** one or more of the tensioning elements (6) are arranged in assigned receptacle pockets (30) in the sidewalls.

7. The light shaping device (1) according to at least one of the preceding claims, **characterized by** a collapsible design.

8. The light shaping device (1) according to at least one of the preceding claims, **characterized in that** the fastening mechanism comprises snap fasteners and/or hook- and-loop fastener sections.

9. The light shaping device (1) according to at least one of the preceding claims, **characterized in that** the fastening mechanism comprises one or more receptacle pockets (30), into which the ends of the tensioning elements (6) are inserted.

10. The light shaping device (1) according to at least one of the preceding claims, **characterized in that** at least some of the tensioning elements (6) are arranged in an intersecting fashion.

11. The light shaping device (1) according to at least one of the preceding claims, **characterized in that** at least some of the tensioning elements (6) are arranged in a non-intersecting fashion.

12. The light shaping device (1) according to at least one of the preceding claims, **characterized in that** the outlet opening (3) is at least partially covered with the light diffusion device (20).

13. The light shaping device (1) according to at least one of the preceding claims, **characterized in that** the flexible material is formed by a layered material with a stack of layers, wherein the following layers are provided and bonded to one another: a textile layer, a metallized polyester film layer and a white polyester film layer.

14. An arrangement comprising a lighting device, particularly a spotlight, and a light shaping device (1) according to at least one of the preceding claims, which is separably mounted on the lighting device.

## Revendications

1. Dispositif de forme de lampe (1) destiné au montage amovible sur un dispositif de fixation d'un dispositif d'éclairage, comprenant :
- des parois latérales (5) en matériau flexible, qui, après le montage sur un dispositif d'éclairage, entourent une partie de forme de lampe et d'émission de lumière (4) qui est formée entre une ouverture d'entrée (2) et une ouverture de sortie (3),
- des éléments de tension (6) qui sont agencés pour rigidifier les parois latérales (5), et
- un mécanisme de fixation pour le montage amovible sur le dispositif de fixation du dispositif d'éclairage,
**caractérisé en ce que**
- l'ouverture d'entrée (3) est formée en tant qu'ouverture de sortie ronde qui est entourée au moins par tronçons par un élément de tension avant (7, 11) qui tend le matériau flexible des parois latérales (5),
- un dispositif de fixation pour la fixation amovible d'un dispositif de diffusion (20) est agencé dans la partie entourant l'ouverture de sortie (3) et/ou sur un intérieur des parois latérales (5) et
- l'élément de tension avant (7, 11) est couplé de manière amovible sur le dispositif de diffusion (20), lorsque celui-ci est appliqué.

2. Dispositif de forme de lampe (1) selon la revendication 1, **caractérisé en ce que** les éléments de tension (6) présentent des éléments de tige qui s'étendent de l'ouverture d'entrée (2) en direction de l'ouverture de sortie (3) dans le sens longitudinal de la partie de forme de lampe et d'émission de lumière (4).

3. Dispositif de forme de lampe (1) selon la revendication 1 ou 2, **caractérisé en ce qu'**au moins une partie des éléments de tension (6) est constituée d'un matériau renforcé de fibres, en particulier d'un matériau renforcé par fibres de carbone.

4. Dispositif de forme de lampe (1) selon au moins l'une des revendications précédentes, **caractérisé en ce que** l'élément de tension avant (7, 11) est en métal.

5. Dispositif de forme de lampe (1) selon au moins l'une des revendications précédentes, **caractérisé en ce que** l'élément de tension avant (7, 11) est réalisé dans un matériau plat.

6. Dispositif de forme de lampe (1) selon au moins l'une des revendications précédentes, **caractérisé en ce qu'**un ou plusieurs des éléments de tension (6) est/sont disposé(s) dans des poches de réception (30) correspondantes dans les parois latérales.

7. Dispositif de forme de lampe (1) selon au moins l'une des revendications précédentes, **caractérisé par** une conception pliable.

8. Dispositif de forme de lampe (1) selon au moins l'une des revendications précédentes, **caractérisé en ce que** le mécanisme de fixation présente des boutons-pression et/ou des tronçons de bande adhésive.

9. Dispositif de forme de lampe (1) selon au moins l'une des revendications précédentes, **caractérisé en ce que** le mécanisme de fixation présente une ou plusieurs poche(s) de réception (30) dans laquelle/lesquelles des extrémités des éléments de tension (6) sont insérées.

10. Dispositif de forme de lampe (1) selon au moins l'une des revendications précédentes, **caractérisé en ce qu'**au moins une partie des éléments de tension (6) sont disposés en se croisant.

11. Dispositif de forme de lampe (1) selon au moins l'une des revendications précédentes, **caractérisé en ce qu'**au moins une partie des éléments de tension (6) sont disposés en ne se croisant pas.

12. Dispositif de forme de lampe (1) selon au moins l'une des revendications précédentes, **caractérisé en ce que** l'ouverture de sortie (3) est couverte au moins partiellement par le dispositif de diffusion de lumière (20).

13. Dispositif de forme de lampe (1) selon au moins l'une des revendications précédentes, **caractérisé en ce que** le matériau flexible est formé d'un matériau en couches avec une pile de couches, dans lequel les couches collées suivantes sont prévues : couche textile, une couche de film polyester métallisée et une couche de film polyester blanche.

14. Dispositif, comprenant un dispositif d'éclairage, en particulier des phares automobiles, et un dispositif de forme de lampe (1) monté amovible sur le dispositif d'éclairage selon au moins l'une des revendications précédentes.
